# EUROPÄISCHE PATENTSCHRIFT

(11) **EP 2 591 306 B1**
(45) Veröffentlichungstag und Bekanntmachung des Hinweises auf die Patenterteilung: **15.04.2020**
(21) Anmeldenummer: 11761523.7
(22) Anmeldetag: 17.08.2011
(51) Int. Cl.: H02G 7/00, G01B 7/02

(54) **VERFAHREN UND VORRICHTUNG ZUM BESTIMMEN EINER LÄNGE EINES ZWISCHEN MASTEN GESPANNTEN LEITERSEILS EINER FREILEITUNG**
METHOD AND APPARATUS FOR DETERMINING A LENGTH OF A CONDUCTOR CABLE FIXED BETWEEN PYLONS OF AN AERIAL LINE
PROCÉDÉ ET DISPOSITIF DE DÉTERMINATION DE LA LONGUEUR D'UN CÂBLE CONDUCTEUR TENDU ENTRE LES PYLÔNE D'UNE LIGNE AÉRIENNE

(30) Priorität: 16.09.2010 DE 102010040853
(43) Veröffentlichungstag der Anmeldung: 15.05.2013
(73) Patentinhaber: Siemens Aktiengesellschaft, 80333 München (DE)
(72) Erfinder: ZIROFF, Andreas, 80469 München (DE)
(86) Internationale Anmeldenummer: PCT/EP2011/064133
(87) Internationale Veröffentlichungsnummer: WO 2012/034809

(56) Entgegenhaltungen:
- DE-C- 971 444
- DE-C1- 19 546 455
- DE-C1- 19 839 677
- JP-A- 60 027 805
- US-A1- 2002 105 344
- US-A1- 2011 210 756

## Beschreibung

Die vorliegende Erfindung betrifft ein Verfahren zum Bestimmen einer Länge eines zwischen Masten gespannten Leiterseils einer Freileitung gemäß dem Oberbegriff des Patentanspruchs 1 sowie eine Vorrichtung, ausgebildet zum Bestimmen einer Länge eines zwischen Masten gespannten Leiterseils einer Freileitung.

Freileitungsanlagen zur oberirdischen Fortleitung von elektrischer Energie bestehen bekanntermaßen aus Stützpunkten oder Masten, zwischen denen Leiterseile gespannt sind, die als nicht isolierte elektrische Leiter dienen. Zwischen zwei benachbarten Stützpunkten hängen die Leiterseile dabei mehr oder weniger stark durch. Der Durchhang der Leiterseile ist von der Temperatur der Leiterseile und von äußeren Einwirkungen auf die Leiterseile, etwa Wind- und Eislasten, abhängig. Hohe Außentemperaturen, starke Sonneneinstrahlung und hohe in den Leiterseilen fließende Stromstärken führen zu einer Erwärmung der Leiterseile, durch die sich der Durchhang der Leiterseile erhöht. Es muss sichergestellt werden, dass der Durchhang der Leiterseile einen zulässigen Maximalwert nicht überschreitet. Zu diesem Zweck ist es wünschenswert, einen gegenwärtigen Durchhang eines Leiterseils ermitteln zu können.

Aus dem Stand der Technik ist es bekannt, den Durchhang eines Leiterseils auf Grundlage einer Temperaturmessung zu bestimmen. Die Temperaturmessung wird dabei mittels eines direkt auf dem Leiterseil angebrachten Temperatursensors durchgeführt. Aus der ermittelten Temperatur des Leiterseils wird anschließend der Durchhang des Leiterseils errechnet.

Die JP 60 027 805 A beschreibt ein Verfahren zur Messung einer Länge eines Kabels, das eine integrierte Glasfaser aufweist. Dabei wird Licht in ein erstes Ende der Glasfaser eingekoppelt und an einem zweiten Ende der Glasfaser reflektiert. Aus der Laufzeit des Lichts wird die Kabellänge berechnet.

Die nach dem Anmeldetag der vorliegenden Patentanmeldung veröffentlichte US 2011/0210756 A1 beschreibt eine Vorrichtung zur Bestimmung einer Länge eines Bohrgestänges. Dazu werden elektrische Pulse in einen parallel zum Bohrgestänge angeordneten Leiter eingekoppelt und an einem zweiten Ende des Leiters reflektiert.

Die DE 198 39 677 C1 beschreibt eine Vorrichtung zur Messung einer Länge einer elektrischen Leitung in einem verzweigten Leitungsnetz. Die Vorrichtung umfasst einen Impulsgeber zum Einspeisen von Impulsen in die Leitung und eine Einrichtung zur Auswertung eines Impulsechos.

Die US 2002/105344 A1 beschreibt eine Vorrichtung zur Messung einer Länge eines Kabels, die ein Rechtecksignal an einen Leiter eines Leiterpaars anlegt und einen im anderen Leiter des Leiterpaars induzierten Strom detektiert.

Die DE 195 46 455 C1 beschreibt ein Messverfahren und eine Messanordnung zur Ermittlung einer Länge einer elektrischen Leitung. Dabei werden in ein erstes Leitungsende Signale eingekoppelt und an einem zweiten Leitungsende reflektiert. Die DE 971 444 C beschreibt eine Selektivschutzeinrichtung, bei der ein frequenzmoduliertes Signal in eine Leitung eingekoppelt wird. Das Signal kann an einer Störstelle reflektiert und von einem Empfänger wieder empfangen werden, wobei die Entfernung zur Störstelle aus einer Frequenzverschiebung des Signals errechnet werden kann.

Aufgabe der vorliegenden Erfindung ist es, ein verbessertes Verfahren zum Bestimmen einer Länge eines zwischen Masten gespannten Leiterseils einer Freileitung anzugeben. Diese Aufgabe wird durch ein Verfahren mit den Merkmalen des Anspruchs 1 gelöst. Es ist weiter Aufgabe der vorliegenden Erfindung, eine verbesserte Vorrichtung zum Bestimmen einer Länge eines zwischen Masten gespannten Leiterseils einer Freileitung bereitzustellen. Diese Aufgabe wird durch eine Vorrichtung mit den Merkmalen des Anspruchs 7 gelöst. Bevorzugte Weiterbildungen sind in den abhängigen Ansprüchen angegeben.

Ein erfindungsgemäßes Verfahren zum Bestimmen einer Länge eines zwischen Masten gespannten Leiterseils einer Freileitung weist Schritte auf zum Einkoppeln eines elektromagnetischen Signals in ein erstes Ende des Leiterseils, zum Empfangen des eingekoppelten elektromagnetischen Signals an einem zweiten Ende des Leiterseils, zum erneuten Einkoppeln des elektromagnetischen Signals in das zweite Ende des Leiterseils, zum Ermitteln einer Laufzeit, die zwischen dem Einkoppeln des Signals am ersten Ende des Leiterseils und dem Eintreffen des neu eingekoppelten Signals am ersten Ende des Leiterseils vergeht, und zum Bestimmen der Länge des Leiterseils aus der Laufzeit. Vorteilhafterweise stellt dieses Verfahren eine einfache und technisch leicht realisierbare Messmethode zum Bestimmen der Länge des Leiterseils dar, die eine integrale Messung der Länge des Leiterseils ohne auf dem Leiterseil angebrachte Sensoren oder Infrastrukturkomponenten ermöglicht.

In einer Weiterbildung des Verfahrens wird aus der berechneten Länge des Leiterseils ein Durchhang des Leiterseils errechnet. Vorteilhafterweise gestattet das Verfahren dann eine Feststellung, ob ein zulässiger maximaler Durchhang des Leiterseils eingehalten ist.

In einer Ausführungsform des Verfahrens wird ein gepulstes elektromagnetisches Signal in das erste Ende des Leiterseils eingekoppelt und eine Laufzeit ermittelt, die ein Einzelpuls des gepulsten Signals zum Durchlaufen des Leiterseils benötigt. Vorteilhafterweise lässt sich dieses Verfahren mit besonders geringem Aufwand durchführen.

In einer anderen Ausführungsform des Verfahrens wird ein frequenzmoduliertes kontinuierliches elektromagnetisches Signal in das erste Ende des Leiterseils eingekoppelt und eine Frequenzdifferenz zwischen dem am ersten Ende des Leiterseils eingekoppelten Signal und dem am ersten Ende des Leiterseils eintreffenden, neu eingekoppelten, Signal bestimmt. Anschließend wird aus der Frequenzdifferenz die Laufzeit errechnet. Vorteilhafterweise gestattet diese Ausführungsform des Verfahrens eine besonders hohe Messgenauigkeit bis in den Zentimeter-Bereich. Außerdem gestattet diese Ausführungsform des Verfahrens, die Messung der Laufzeit bei mehreren unterschiedlichen Frequenzen durchzuführen, wodurch sich Robustheit und Generizität des Messverfahrens erhöhen.

In einer Weiterbildung wird das Verfahren mehrfach hintereinander ausgeführt, um eine zeitliche Veränderung der Länge des Leiterseils zu ermitteln. Anschließend wird aus der zeitlichen Veränderung der Länge des Leiterseils eine Prognose über eine zukünftige Entwicklung der Länge des Leiterseils erstellt. Vorteilhafterweise wird diese Weiterbildung durch die durch das Verfahren erzielten hohen Messraten ermöglicht. Die erstellte Prognose über die Entwicklung der Länge des Leiterseils kann vorteilhafterweise zur Steuerung einer Lastverteilung herangezogen werden. Dadurch wird es vorteilhafterweise möglich, einzelne Leiterseile kurzfristig zu überlasten, um auf unvorhergesehene Ereignisse innerhalb eines Versorgungsnetzes flexibel zu reagieren.

Bevorzugt weist das eingekoppelte elektromagnetische Signal eine Frequenz zwischen 1 kHz und 100 MHz auf. Vorteilhafterweise stellt dieser Frequenzbereich einen günstigen Kompromiss dar, der eine hinreichend genaue Messung bei gleichzeitig niedriger Signaldämpfung im Leiterseil ermöglicht.

Eine erfindungsgemäße Vorrichtung ist ausgebildet zum Bestimmen einer Länge eines zwischen Masten gespannten Leiterseils einer Freileitung und weist eine Sende-Empfangseinheit zum Einkoppeln eines ersten elektromagnetischen Signals in ein erstes Ende des Leiterseils und zum Auskoppeln eines zweiten elektromagnetischen Signals aus dem ersten Ende des Leiterseils auf. Die Vorrichtung weist weiterhin eine Reflektionseinheit zum Empfangen des ersten elektromagnetischen Signals an einem zweiten Ende des Leiterseils und zum Einkoppeln des zweiten elektromagnetischen Signals in das zweite Ende des Leiterseils auf. Die Sende-Empfangseinheit ist ausgebildet, eine Laufzeit zu ermitteln, die zwischen dem Einkoppeln des ersten Signals am ersten Ende des Leiterseils und dem Eintreffen des zweiten Signals am ersten Ende des Leiterseils vergeht, wobei aus der Laufzeit die Länge des Leiterseils bestimmt wird. Vorteilhafterweise gestattet diese Vorrichtung eine Ermittlung der Länge des Leiterseils ohne zusätzliche auf der Freileitungsanlage angebrachte Sensoren oder Infrastrukturkomponenten.

Bevorzugt weist die Sende-Empfangseinheit der Vorrichtung einen kapazitiven Koppler und/oder einen induktiven Koppler auf. Vorteilhafterweise kann der kapazitive Koppler und/oder induktive Koppler dann zum Ein- und/oder Auskoppeln eines elektromagnetischen Signals dienen.

In einer besonders bevorzugten Weiterbildung der Vorrichtung ist diese ausgebildet, ein Datensignal in das Leiterseil einzukoppeln. Vorteilhafterweise kann das Leiterseil dann auch als Datenübertragungsmedium verwendet werden.

Die Erfindung wird nun anhand der beigefügten Figuren genauer erläutert. Dabei zeigen
Figur 1 eine Freileitung mit einem Leiterseil, das einen Durchhang aufweist;
Figur 2 eine erste Messanordnung zum Bestimmen einer Länge des Leiterseils;
Figur 3 ein Diagramm zur Erläuterung eines ersten Messverfahrens zum Bestimmen der Länge des Leiterseils;
Figur 4 eine zweite Messanordnung zum Bestimmen der Länge des Leiterseils und
Figur 5 ein Diagramm zur Erläuterung einer zweiten Messmethode zum Bestimmen der Länge des Leiterseils.

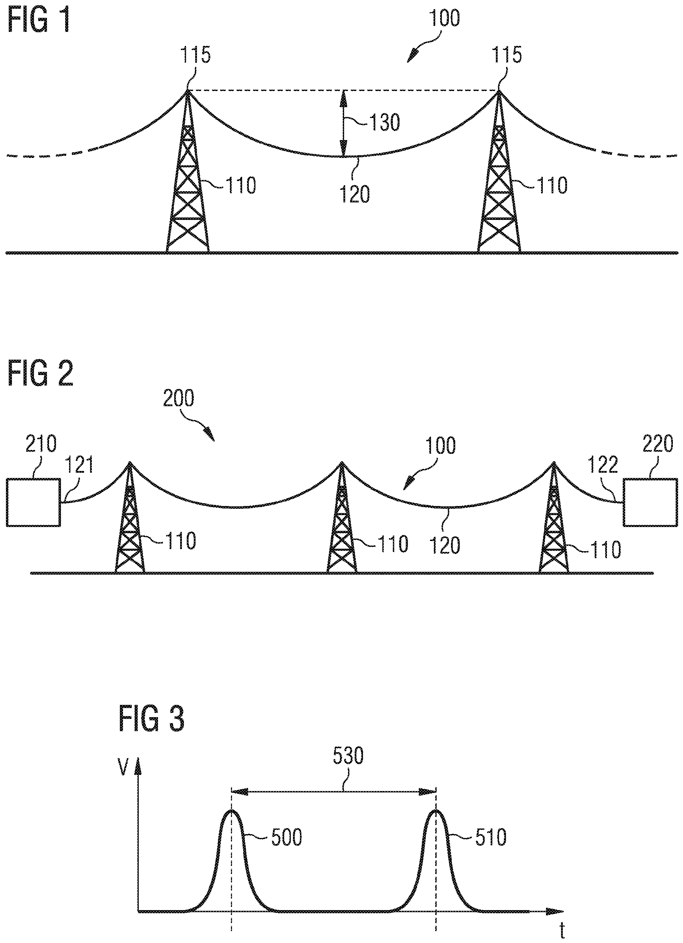

Figur 1 zeigt in schematisierter Darstellung einen Abschnitt einer Freileitung 100. Die Freileitung 100 dient zur oberirdischen Übertragung von elektrischer Energie. Die Freileitung 100 umfasst eine Mehrzahl von Masten 110, zwischen denen ein Leiterseil 120 gespannt ist. Das Leiterseil 120 ist dazu an Aufhängepunkten 115 an den Masten 110 aufgehängt. Die Aufhängepunkte 115 können Isolatoren und andere Armaturen aufweisen. Das Leiterseil 120 besteht aus einem elektrisch leitfähigen Material, beispielsweise aus Kupfer, Aluminium oder Stahl und ist üblicherweise nicht isoliert. Die Freileitung 100 kann auch mehrere parallel verlaufende Leiterseile 120 aufweisen.

Zwischen zwei benachbarten Masten 110 weist das Leiterseil 120 einen Durchhang 130 auf. Der Durchhang 130 ist als maximaler vertikaler Abstand zwischen dem Leiterseil 120 und einer gedachten Verbindungslinie zwischen den beiden Aufhängepunkten 115 der benachbarten Masten 110 definiert. Der maximal zulässige Durchhang 130 des Leiterseils 120 ist durch gesetzliche Bestimmungen und technische Erfordernisse begrenzt. Eine Erwärmung des Leiterseils 120 durch Stromfluss im Leiterseil 120 oder durch Sonneneinstrahlung oder eine hohe Umgebungstemperatur führt zu einer Erhöhung des Durchhangs 130.

Der Durchhang 130 des Leiterseils 120 steht in direktem Zusammenhang zur Länge des Leiterseils 120. Erhöht sich die Länge des Leiterseils 120, so vergrößert sich auch der Durchhang 130 des Leiterseils 120. Zur Bestimmung des Durchhangs 130 genügt es daher, die Länge des Leiterseils 120 zu bestimmen. Der Durchhang 130 kann dann aus der Länge des Leiterseils 120 berechnet werden.

Figur 2 zeigt eine schematische Darstellung einer ersten Messanordnung 200 zur Ermittlung der Länge des Leiterseils 120 der Freileitung 100. Figur 2 zeigt einen Abschnitt der Freileitung 100 zwischen einem ersten Ende 121 des Leiterseils 120 und einem zweiten Ende 122 des Leiterseils 120. Die Länge des Leiterseils 120 zwischen den Enden 121, 122 kann beispielsweise einige Kilometer bis über 100 km betragen. Der dargestellte Abschnitt der Freileitung 100 weist eine Mehrzahl von Masten 110 auf, zwischen denen das Leiterseil 120 jeweils durchhängt. Ist die Anzahl der Masten 110 bekannt, so kann aus einer Messung der Länge des Leiterseils 120 ein mittlerer Durchhang 130 des Leiterseils 120 zwischen zwei benachbarten Masten 110 bestimmt werden.

Zur Bestimmung der Länge des Leiterseils 120 weist die erste Messanordnung 200 eine Sendeeinheit 210 auf, die mit dem ersten Ende 121 des Leiterseils 120 verbunden ist. Außerdem weist die erste Messanordnung 200 eine Empfangseinheit 220 auf, die mit dem zweiten Ende 122 des Leiterseils 120 verbunden ist. Die Sendeeinheit 210 ist dazu ausgebildet, ein elektromagnetisches Signal in das erste Ende 121 des Leiterseils 120 einzukoppeln. Zu diesem Zweck kann die Sendeeinheit 210 beispielsweise einen induktiven oder kapazitiven Koppler umfassen. Das durch die Sendeeinheit 210 in das erste Ende 121 des Leiterseils 120 eingekoppelte elektromagnetische Signal durchläuft das Leiterseil 120 bis zum zweiten Ende 122 wo es durch die Empfangseinheit 220 ausgekoppelt und detektiert wird. Zu diesem Zweck kann die Empfangseinheit 220 ebenfalls einen induktiven oder kapazitiven Koppler aufweisen.

Aus der Laufzeit, die das durch die Sendeeinheit 210 eingekoppelte elektromagnetische Signal benötigt, um die Empfangseinheit 220 zu erreichen, kann die Länge des Leiterseils 120 berechnet werden. In die Berechnung fließt dabei die bekannte Ausbreitungsgeschwindigkeit des elektromagnetischen Signals im Leiterseil 120 ein. Die Ermittlung der Laufzeit des durch die Sendeeinheit 210 eingekoppelten Signals erfordert, dass Sendeeinheit 210 und Empfangseinheit 220 über miteinander synchronisierte Zeitgeber verfügen. Die Laufzeit ergibt sich als Differenz zwischen dem Zeitpunkt der Detektion des Signals durch die Empfangseinheit 220 und dem Zeitpunkt des Aussendens des Signals durch die Sendeeinheit 210.

Figur 3 zeigt ein schematisches Diagramm zur Erläuterung des durch die erste Messanordnung 200 durchgeführten Messverfahrens. Im Diagramm der Figur 3 ist auf der horizontalen Achse eine Messzeit t, auf der vertikalen Achse eine Amplitude V eines elektromagnetischen Signals aufgetragen. Zu Beginn des Messvorgangs koppelt die Sendeeinheit 210 einen eingekoppelten Puls 500 in das erste Ende 121 des Leiterseils 120 ein. Der elektromagnetische Puls 500 durchläuft anschließend das Leiterseil 120, bis er nach einer Laufzeit 530 als ausgekoppelter Puls 510 durch die Empfangseinheit 220 am zweiten Ende 122 des Leiterseils 120 detektiert wird. Die Laufzeit 530 stellt ein direktes Maß für die Länge des Leiterseils 120 dar, sodass sich aus der Laufzeit 530 die Länge des Leiterseils 120 errechnen lässt. Aus der Länge des Leiterseils 120 lässt sich wiederum der mittlere Durchhang 130 des Leiterseils 120 berechnen.

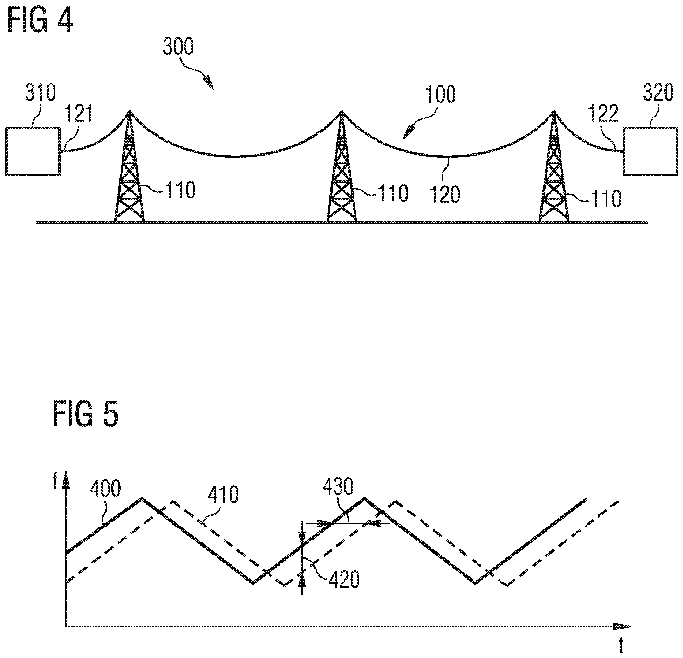

Figur 4 zeigt in schematischer Darstellung eine zweite Messanordnung 300 zur Ermittlung der Länge des Leiterseils 120 der Freileitung 100. Figur 4 zeigt wiederum einen Abschnitt der Freileitung 100, der eine Mehrzahl von Masten 110 umfasst, zwischen denen das Leiterseil 120 gespannt ist. Die Länge des dargestellten Abschnitts der Freileitung 100 kann wiederum einige Kilometer bis über 100 km betragen.

Die zweite Messanordnung 300 umfasst eine kombinierte Sende-Empfangseinheit 310, die am ersten Ende 121 des Leiterseils 120 angeordnet ist. Außerdem umfasst die zweite Messanordnung 300 eine Reflexionseinheit 320, die am zweiten Ende 122 des Leiterseils 120 angeordnet ist.

Die Sende-Empfangseinheit 310 ist ausgebildet, ein elektromagnetisches Signal in das erste Ende 121 des Leiterseils 120 einzukoppeln. Das elektromagnetische Signal durchläuft das Leiterseil 120 dann bis zum zweiten Ende 122, wo es von der Reflektionseinheit 320 reflektiert wird. Anschließend durchläuft das reflektierte elektromagnetische Signal das Leiterseil 120 in umgekehrter Richtung bis zum ersten Ende 121, wo es von der Sende-Empfangseinheit 310 aus dem Leiterseil 120 ausgekoppelt und detektiert wird.

Zum Ein- und Auskoppeln des elektromagnetischen Signals kann die Sende-Empfangseinheit 310 wiederum einen oder mehrere induktive oder kapazitive Koppler aufweisen. Die Reflektionseinheit 320 am zweiten Ende 122 des Leiterseils 120 kann ebenfalls als kombinierte Sende-Empfangseinheit ausgebildet sein. Hierzu empfängt die Reflektionseinheit 320 ein am zweiten Ende 122 ankommendes elektromagnetisches Signal, filtert ein eventuell vorhandenes Rauschen heraus, regeneriert und verstärkt das elektromagnetische Signal und koppelt es anschließend erneut in das zweite Ende 122 des Leiterseils 120 ein.

Die Laufzeit des elektromagnetischen Signals von der Sende-Empfangseinheit 310 am ersten Ende 121 des Leiterseils 120 bis zur Reflektionseinheit 320 am zweiten Ende 122 des Leiterseils 120 und zurück zur Sende-Empfangseinheit 310 am ersten Ende 121 des Leiterseils 120 stellt ein Maß für die Länge des Leiterseils 120 dar und erlaubt die Berechnung der Länge des Leiterseils 120. Hierbei muss eine eventuell zur Reflexion des elektromagnetischen Signals durch die Reflexionseinheit 320 am zweiten Ende 122 des Leiterseils 120 benötigte Zeit abgezogen werden.

Die zweite Messanordnung 300 bietet gegenüber der ersten Messanordnung 200 der Figur 2 den Vorteil, dass die an den beiden Enden 121, 122 des Leiterseils 120 angeordneten Komponenten 310, 320 der zweiten Messanordnung 300 nicht über eine explizite Zeitsynchronisation verfügen müssen. Stattdessen muss nur die Sende-Empfangseinheit 310 die Zeit zwischen dem Aussenden des elektromagnetischen Signals und dem Eintreffen des reflektierten elektromagnetischen Signals am ersten Ende 121 des Leiterseils 120 messen.

Die zweite Messanordnung 300 der Figur 4 kann das anhand der Figur 3 erläuterte Messverfahren ausführen. Die Sende-Empfangseinheit 310 koppelt dann den eingekoppelten Puls 500 zu Beginn des Messvorgangs in das erste Ende 121 des Leiterseils 120 ein. Der elektromagnetische Puls durchläuft das Leiterseil 120, wird am zweiten Ende 122 des Leiterseils 120 durch die Reflexionseinheit 320 reflektiert und trifft schließlich nach der Laufzeit 530 wieder am ersten Ende 121 des Leiterseils 120 ein, wo er als ausgekoppelter Puls 510 durch die Sende-Empfangseinheit 310 detektiert wird.

Die Sende-Empfangseinheit 310 kann periodisch elektromagnetische Pulse 500 in das Leiterseil 120 einkoppeln, um mehrere Messungen hintereinander auszuführen. Dabei ist wichtig, dass der zeitliche Abstand zweier aufeinander folgender Pulse 500 größer als die Laufzeit 530 eines einzelnen Pulses vom ersten Ende 121 zum zweiten Ende 122 und zurück zum ersten Ende 121 des Leiterseils 120 ist.

Die zweite Messanordnung 300 der Figur 4 kann jedoch bevorzugt auch ein anderes Messverfahren ausführen, das schematisch in Figur 5 dargestellt ist. Figur 5 zeigt einen Graphen, auf dessen horizontaler Achse eine Messzeit t und auf dessen vertikaler Achse eine Frequenz f eines elektromagnetischen Signals aufgetragen ist.

Beim Messverfahren der Figur 5 sendet die Sende-Empfangseinheit 310 ein frequenzmoduliertes kontinuierliches elektromagnetisches Signal 400 aus. Ein solches frequenzmoduliertes kontinuierliches elektromagnetisches Signal wird auch als FMCW (frequency modulated constant wave) bezeichnet. Die Frequenz des durch die Sende-Empfangseinheit 310 in das erste Ende 121 des Leiterseils 120 eingekoppelten Signals 400 verändert sich zeitabhängig und periodisch. Dabei steigt die Frequenz des eingekoppelten Signals 400 zunächst linear an, um anschließend linear abzufallen, bevor sich ein erneuter linearer Anstieg der Frequenz anschließt usw. Anstelle der sich ergebenden Dreiecksform der Frequenz kann alternativ ein sägezahnförmiger Frequenzverlauf gewählt werden, dessen Frequenz nach einem linearen Anstieg schlagartig auf einen niedrigeren Wert verändert wird, um anschließend erneut linear anzusteigen.

Das durch die Sende-Empfangseinheit 310 in das erste Ende 121 des Leiterseils 120 eingekoppelte frequenzmodulierte kontinuierliche elektromagnetische Signal 400 durchläuft das Leiterseil 120 bis zum zweiten Ende 122, wird dort durch die Reflexionseinheit 320 reflektiert, durchläuft das Leiterseil 120 erneut in umgekehrter Richtung und trifft schließlich am ersten Ende 121 des Leiterseils 120 bei der Sende-Empfangseinheit 310 ein, wo es als ausgekoppeltes Signal 410 detektiert wird. Da sich die Frequenz des eingekoppelten Signals 400 fortwährend ändert und das Signal zum zweimaligen Durchlaufen des Leiterseils 120 eine gewisse Laufzeit 430 benötigt, besteht zu jedem Zeitpunkt eine feste Frequenzdifferenz 420 zwischen dem am ersten Ende 121 des Leiterseils 120 eingekoppelten Signals 400 und dem zum selben Zeitpunkt am ersten Ende 121 ausgekoppelten reflektierten Signal 410. Die Bestimmung der Frequenzdifferenz 420 kann in an sich bekannter Weise durch heterodyne Detektion erfolgen.

Die Frequenzdifferenz 420 ist umso größer, je größer die Laufzeit 430 des Signals durch das Leiterseil 120 ist, und erlaubt eine Berechnung der Laufzeit 430. In die Berechnung fließt dabei die zeitliche Veränderung df/dt des eingekoppelten frequenzmodulierten Signals 400 ein. Aus der Laufzeit 430 des elektromagnetischen Signals lässt sich wiederum die Länge des Leiterseils 120 zwischen seinen Enden 121, 122 berechnen. Aus der Länge des Leiterseils 120 kann auf den Durchhang 130 des Leiterseils 120 geschlossen werden.

Das anhand der Figur 5 erläuterte zweite Messverfahren erlaubt es vorteilhafterweise, die Laufzeit 340 für unterschiedliche Frequenzen des eingekoppelten Signals 400 zu ermitteln. Dadurch erhöhen sich die Robustheit des Messprinzips und die Generizität der Messanordnung 300.

Je höher die Frequenz des eingekoppelten Signals 400 ist, desto genauer lässt sich die Frequenzdifferenz 420 und somit die Laufzeit 430 bestimmen. Allerdings steigt mit der Frequenz des eingekoppelten Signals 400 auch die durch das Leiterseil 120 verursachte Dämpfung des Signals 400. Eine Frequenz des eingekoppelten Signals 400 zwischen einigen kHz bis zu etwa 100 MHz stellt einen günstigen Kompromiss zwischen den Anforderungen dar. Die Messung der Länge des Leiterseils 120 wird dadurch mit einer Genauigkeit bis in den Zentimeter-Bereich ermöglicht.

Die Messung der Länge des Leiterseils 120 kann periodisch wiederholt erfolgen. Aus einer Mehrzahl aufeinanderfolgender Messungen der Länge des Leiterseils 120 lässt sich eine zeitliche Entwicklung der Länge des Leiterseils 120 in der Vergangenheit ermitteln. Diese zeitliche Entwicklung der Länge des Leiterseils 120 kann in die Zukunft extrapoliert werden, um eine Prognose über eine voraussichtliche Entwicklung der Länge des Leiterseils 120 zu erstellen. Eine solche Prognose kann bei einer Steuerung einer Lastverteilung in einem Elektrizitätsnetz hilfreich sein. So kann beispielsweise die Freileitung 100 mit höherer Strömstärke beaufschlagt werden, wenn die Prognose der Länge des Leiterseils 120 zu erkennen gibt, dass das Leiterseil 120 voraussichtlich keinen kritischen Durchhang 130 erreichen wird.

Da die an den Leitungsenden 121, 122 vorgesehenen Sende-Empfangseinheiten 210, 220, 310 über Vorrichtungen zum Ein- und Auskoppeln elektromagnetischer Signale in das Leiterseil 120 verfügen, können die Sende- und Empfangseinheiten 210, 220, 310 auch zum Einkoppeln von digitalen Datensignalen verwendet werden. Dies gestattet es, dass Leiterseil 120 der Freileitung 110 als Übertragungsmedium zur Datenfernübertragung zu nutzen.

## Patentansprüche

1. Verfahren zum Bestimmen einer Länge eines zwischen Masten (110) gespannten Leiterseils (120) einer Freileitung (100),
**dadurch gekennzeichnet, dass**
- ein elektromagnetisches Signal (400, 500) in ein erstes Ende (121) des Leiterseils (120) eingekoppelt wird,
- das eingekoppelte elektromagnetische Signal (400, 500) an einem zweiten Ende (122) des Leiterseils (120) empfangen und erneut in das zweite Ende (122) des Leiterseils (120) eingekoppelt wird,
- eine Laufzeit (430, 530) ermittelt wird, die zwischen dem Einkoppeln des Signals (400, 500) am ersten Ende (121) des Leiterseils (120) und dem Eintreffen des neu eingekoppelten Signals (410, 510) am ersten Ende (121) des Leiterseils (120) vergeht, und
- aus der Laufzeit (430, 530) die Länge des Leiterseils (120) bestimmt wird.

2. Verfahren gemäß Anspruch 1,
**dadurch gekennzeichnet, dass**
aus der berechneten Länge des Leiterseils (120) ein Durchhang (130) des Leiterseils (120) errechnet wird.

3. Verfahren gemäß einem der vorhergehenden Ansprüche,
**dadurch gekennzeichnet, dass**
ein gepulstes elektromagnetisches Signal (500) in das erste Ende (121) des Leiterseils (120) eingekoppelt und eine Laufzeit (530) ermittelt wird, die ein Einzelpuls des gepulsten Signals (500) zum Durchlaufen des Leiterseils (120) benötigt.

4. Verfahren gemäß einem der Ansprüche 1 und 2,
**dadurch gekennzeichnet, dass**
ein frequenzmoduliertes kontinuierliches elektromagnetisches Signal (400) in das erste Ende (121) des Leiterseils (120) eingekoppelt
und eine Frequenzdifferenz (420) zwischen dem am ersten Ende (121) des Leiterseils (120) eingekoppelten Signal (400) und dem am ersten Ende (121) des Leiterseils (120) eintreffenden, neu eingekoppelten, Signal (410) bestimmt wird,
wobei aus der Frequenzdifferenz (420) die Laufzeit (430) errechnet wird.

5. Verfahren gemäß einem der vorhergehenden Ansprüche,
**dadurch gekennzeichnet, dass**
das Verfahren mehrfach hintereinander ausgeführt wird, um eine zeitliche Veränderung der Länge des Leiterseils (120) zu ermitteln,
wobei aus der zeitlichen Veränderung der Länge des Leiterseils (120) eine Prognose über eine zukünftige Entwicklung der Länge des Leiterseils (120) erstellt wird.

6. Verfahren gemäß einem der vorhergehenden Ansprüche,
**dadurch gekennzeichnet, dass**
das eingekoppelte elektromagnetische Signal (400, 500) eine Frequenz zwischen 1 kHz und 100 MHz aufweist.

7. Vorrichtung (300),
ausgebildet zum Bestimmen einer Länge eines zwischen Masten (110) gespannten Leiterseils (120) einer Freileitung (100),
wobei
die Vorrichtung (300) eine Sende-Empfangseinheit (310) zum Einkoppeln eines ersten elektromagnetischen Signals (400, 500) in ein erstes Ende (121) des Leiterseils (120) und zum Auskoppeln eines zweiten elektromagnetischen Signals (410, 510) aus dem ersten Ende (121) des Leiterseils (120) aufweist,
wobei die Vorrichtung (300) eine Reflektionseinheit (320) zum Empfangen des ersten elektromagnetischen Signals (400, 500) an einem zweiten Ende (122) des Leiterseils (120) und zum Einkoppeln des zweiten elektromagnetischen Signals (410, 510) in das zweite Ende (122) des Leiterseils (120) aufweist,
wobei die Sende-Empfangseinheit (310) ausgebildet ist, eine Laufzeit (430, 530) zu ermitteln, die zwischen dem Einkoppeln des ersten Signals (400, 500) am ersten Ende (121) des Leiterseils (120) und dem Eintreffen des zweiten Signals (410, 510) am ersten Ende (121) des Leiterseils (120) vergeht, wobei aus der Laufzeit (430, 530) die Länge des Leiterseils (120) bestimmt wird.

8. Vorrichtung (200, 300) gemäß Anspruch 7,
**dadurch gekennzeichnet, dass**
die Sende-Empfangseinheit (310) einen kapazitiven Koppler und/oder einen induktiven Koppler aufweist.

9. Vorrichtung (200, 300) gemäß einem der Ansprüche 7 oder 8,
**dadurch gekennzeichnet, dass**
die Vorrichtung (200, 300) ausgebildet ist, ein Datensignal in das Leiterseil (120) einzukoppeln.

## Claims

1. Method for determining a length of a conductor cable (120) suspended between pylons (110) of an overhead line (100) ,
**characterized in that**
- an electromagnetic signal (400, 500) is injected into a first end (121) of the conductor cable (120),
- the injected electromagnetic signal (400, 500) is received at a second end (122) of the conductor cable (120) and injected once again into the second end (122) of the conductor cable (120),
- a propagation time (430, 530) that elapses between the injection of the signal (400, 500) at the first end (121) of the conductor cable (120) and the arrival of the re-injected signal (410, 510) at the first end (121) of the conductor cable (120) is ascertained, and
- the propagation time (430, 530) is used to determine the length of the conductor cable (120).

2. Method according to Claim 1,
**characterized in that**
the calculated length of the conductor cable (120) is used to work out a sag (130) of the conductor cable (120).

3. Method according to one of the preceding claims,
**characterized in that**
a pulsed electromagnetic signal (500) is injected into the first end (121) of the conductor cable (120)
and a propagation time (530) that a single pulse of the pulsed signal (500) needs to pass through the conductor cable (120) is ascertained.

4. Method according to either of Claims 1 and 2,
**characterized in that**
a frequency-modulated continuous electromagnetic signal (400) is injected into the first end (121) of the conductor cable (120)
and a frequency difference (420) between the signal (400) injected at the first end (121) of the conductor cable (120) and the re-injected signal (410) arriving at the first end (121) of the conductor cable (120) is determined,
the frequency difference (420) being used to work out the propagation time (430).

5. Method according to one of the preceding claims,
**characterized in that**
the method is performed a number of times one after the other in order to ascertain a change over time in the length of the conductor cable (120),
the change over time in the length of the conductor cable (120) being used to produce a prediction of a future development of the length of the conductor cable (120).

6. Method according to one of the preceding claims,
**characterized in that**
the injected electromagnetic signal (400, 500) has a frequency of between 1 kHz and 100 MHz.

7. Apparatus (300),
designed for determining a length of a conductor cable (120) suspended between pylons (110) of an overhead line (100),
the apparatus (300) having a transmitting-receiving unit (310) for injecting a first electromagnetic signal (400, 500) into a first end (121) of the conductor cable (120) and for extracting a second electromagnetic signal (410, 510) from the first end (121) of the conductor cable (120),
the apparatus (300) having a reflection unit (320) for receiving the first electromagnetic signal (400, 500) at a second end (122) of the conductor cable (120) and for injecting the second electromagnetic signal (410, 510) into the second end (122) of the conductor cable (120),
the transmitting-receiving unit (310) being designed to ascertain a propagation time (430, 530) that elapses between the injection of the first signal (400, 500) at the first end (121) of the conductor cable (120) and the arrival of the second signal (410, 510) at the first end (121) of the conductor cable (120), the propagation time (430, 530) being used to determine the length of the conductor cable (120).

8. Apparatus (200, 300) according to Claim 7,
**characterized in that**
the transmitting-receiving unit (310) has a capacitive coupler and/or an inductive coupler.

9. Apparatus (200, 300) according to either of Claims 7 and 8,
**characterized in that**
the apparatus (200, 300) is designed to inject a data signal into the conductor cable (120).

## Revendications

1. Procédé de détermination d'une longueur d'un câble conducteur (120) d'une ligne aérienne (100) tendu entre des pylônes (110),
**caractérisé en ce que**
- un signal électromagnétique (400, 500) est couplé dans une première extrémité (121) du câble conducteur (120),
- le signal électromagnétique (400, 500) couplé est reçu sur une deuxième extrémité (122) du câble conducteur (120) et de nouveau couplé dans la seconde extrémité (122) du câble conducteur (120),
- un temps de transit (430, 530) qui s'écoule entre le couplage du signal (400, 500) dans la première extrémité (121) du câble conducteur (120) et l'arrivée du signal (410, 510) nouvellement couplé à la première extrémité (121) du câble conducteur (120), et
- la longueur du câble conducteur (120) est déterminée à partir du temps de transit (430, 530).

2. Procédé selon la revendication 1,
**caractérisé en ce qu'**
une flèche (130) du câble conducteur (120) est calculée à partir de la longueur calculée du câble conducteur (120).

3. Procédé selon l'une des revendications précédentes,
**caractérisé en ce qu'**
un signal électromagnétique pulsé (500) est couplé dans la première extrémité (121) du câble conducteur (120) et qu'un temps de transit (530) est établi, à savoir le temps nécessaire pour qu'une impulsion unique du signal pulsé (500) puisse parcourir le câble conducteur (120).

4. Procédé selon l'une des revendications 1 et 2,
**caractérisé en ce qu'**
un signal électromagnétique continu modulé en fréquence (400) est couplé dans la première extrémité (121) du câble conducteur (120) et qu'une différence de fréquence (420) est déterminée entre le signal (400) couplé dans la première extrémité (121) du câble conducteur (120) et le signal (410) nouvellement couplé arrivant à la première extrémité (121) du câble conducteur (120),
le temps de transit (430) étant calculé à partir de la différence de fréquence (420).

5. Procédé selon l'une des revendications précédentes,
**caractérisé en ce que**
le procédé est réitéré plusieurs fois de suite pour calculer une modification temporelle de la longueur du câble conducteur (120),
un pronostic d'un développement futur de la longueur du câble conducteur (120) étant établi sur la base de la modification temporelle de la longueur du câble conducteur (120) .

6. Procédé selon l'une des revendications précédentes,
**caractérisé en ce que**
le signal électromagnétique couplé (400, 500) présente une fréquence comprise entre 1 kHz et 100 MHz.

7. Dispositif (300),
conçu pour déterminer une longueur d'un câble conducteur (120) d'une ligne aérienne (100) tendu entre des pylônes (110),
le dispositif (300) comportant une unité émettrice-réceptrice (310) pour coupler un premier signal électromagnétique (400, 500) dans une première extrémité (121) du câble conducteur (120) et pour découpler un deuxième signal électromagnétique (410, 510) de la première extrémité (121) du câble conducteur (120),
le dispositif (300) comportant une unité de réflexion (320) pour recevoir le premier signal électromagnétique (400, 500) sur une deuxième extrémité (122) du câble conducteur (120) et pour coupler le deuxième signal électromagnétique (410, 510) dans la deuxième extrémité (122) du câble conducteur (120),
l'unité émettrice-réceptrice (310) étant conçue pour déterminer un temps de transit (430, 530) qui s'écoule entre le couplage du premier signal (400, 500) dans la première extrémité (121) du câble conducteur (120) et l'arrivée du deuxième signal (410, 510) à la première extrémité (121) du câble conducteur (120), la longueur du câble conducteur (120) étant calculée à partir du temps de transit (430, 530).

8. Dispositif (200, 300) selon la revendication 7,
**caractérisé en ce que**
l'unité émettrice-réceptrice (310) comporte un coupleur capacitif et / ou un coupleur inductif.

9. Dispositif (200, 300) selon l'une des revendications 7 ou 8,
**caractérisé en ce que**
le dispositif (200,300) est agencé pour coupler un signal de données dans le câble conducteur (120).
